# EUROPÄISCHE PATENTSCHRIFT

(11) **EP 2 335 054 B1**
(45) Veröffentlichungstag und Bekanntmachung des Hinweises auf die Patenterteilung: **01.04.2015**
(21) Anmeldenummer: 09741219.1
(22) Anmeldetag: 07.10.2009
(51) Int. Cl.: G01N 21/77

(54) **OPTISCHER SENSOR**
OPTICAL SENSOR
CAPTEUR OPTIQUE

(30) Priorität: 09.10.2008 DE 102008050767
(43) Veröffentlichungstag der Anmeldung: 22.06.2011
(73) Patentinhaber: Fraunhofer-Gesellschaft zur Förderung der angewandten Forschung e.V., 80686 München (DE)
(72) Erfinder: HEIDRICH, Helmut, 12357 Berlin (DE); LÜTZOW, Peter, 10781 Berlin (DE); VENGHAUS, Herbert, 10557 Berlin (DE)
(74) Vertreter: Pfenning, Meinig & Partner GbR
(86) Internationale Anmeldenummer: PCT/EP2009/007302
(87) Internationale Veröffentlichungsnummer: WO 2010/040565

(56) Entgegenhaltungen:
- US-A- 5 324 933
- US-A- 5 787 212
- MCCURLEY M F ET AL: "Fiber-optic sensor for salt concentration based on polymer swelling coupled to optical displacement" ANALYTICA CHIMICA ACTA, ELSEVIER, AMSTERDAM, NL, Bd. 249, Nr. 2, 1. Januar 1991 (1991-01-01), Seiten 373-380, XP026595272 ISSN: 0003-2670 [gefunden am 1991-01-01]
- LAMBECK P V ET AL: "Three novel integrated optical sensing structures for the chemical domain" SENSORS AND ACTUATORS B, ELSEVIER SEQUOIA S.A., LAUSANNE, CH, Bd. 113, Nr. 2, 27. Februar 2006 (2006-02-27), Seiten 718-729, XP025111963 ISSN: 0925-4005 [gefunden am 2006-02-27]
- HARONIAN D: "In-plane degree of freedom optical waveguide displacement sensors based on geometrical modulation" SENSORS AND ACTUATORS A, ELSEVIER SEQUOIA S.A., LAUSANNE, CH, Bd. 69, Nr. 3, 15. September 1998 (1998-09-15), Seiten 217-225, XP004140044 ISSN: 0924-4247
- CHURENKOV A V: "Silicon micromechanical optical waveguide for sensing and modulation" SENSORS AND ACTUATORS A, ELSEVIER SEQUOIA S.A., LAUSANNE, CH, Bd. 57, Nr. 1, 1. Oktober 1996 (1996-10-01), Seiten 21-27, XP004058203 ISSN: 0924-4247
- LUFF B J ET AL: "INTEGRATED-OPTICAL DIRECTIONAL COUPLER BIOSENSOR", OPTICS LETTERS, OPTICAL SOCIETY OF AMERICA, US, vol. 21, no. 8, 15 April 1996 (1996-04-15) , pages 618-620, XP000589936, ISSN: 0146-9592

## Beschreibung

Die Erfindung betrifft einen optischen Sensor zum Detektieren eines Stoffes.

Aus dem Stand der Technik sind, beispielsweise aus dem Gebiet der Biosensorik, Sensoren zum Detektieren von Stoffen bekannt, deren Funktion darauf beruht, dass ein zu detektierender Stoff an einer funktionalen Oberfläche angelagert, also durch diese Oberfläche absorbiert wird, wobei die funktionale Oberfläche einen selektiven Rezeptor bildet. Informationen über das Vorliegen, die Konzentration oder das Fehlen des Stoffes, der durch die funktionale Oberfläche bevorzugt angelagert wird, lassen sich dann aus der Intensität oder Dicke einer Anlagerung an die funktionale Oberfläche gewinnen.

Aus der Druckschrift US 5 787 212 A sind Sensoren bekannt, die zum Detektieren anderer Observablen - z.B. einer Temperatur oder einer Beschleunigung - dienen und bei denen die jeweilige Observable dadurch messbar wird, dass sich eine optischen Kopplung zwischen zwei Wellenleitern in Abhängigkeit von der jeweiligen Observablen ändert.

Die Druckschrift von Lambeck et al.: Three novel integrated optical sensing structures for the chemical domain", Sensor. Actuat. B-Chem., 113(2), 2006, 718, lehrt einen Sensor zur Detektion chemischer Substanzen, welcher einen Richtkoppler umfasst. Dabei ruft die Absorption eines Analyts eine Änderung der effektiven Brechzahl und damit eine Änderung des Feldprofils im Bereich des Kopplers hervor. Ein ähnlicher Sensor ist auch aus Luff et al: "Integrated-optical directional coupler biosensor", Opt. Lett., 21(8), 1996, 618, bekannt.

Der vorliegenden Erfindung liegt die Aufgabe zugrunde, einen Sensor zuvor skizzierter Art zum Detektieren eines Stoffes zu entwickeln, der ein rein optisches Auslesen erlaubt, um eine Messung fernab elektrischer oder elektronischer Komponenten zu ermöglichen.

Diese Aufgabe wird erfindungsgemäß gelöst durch einen optischen Sensor mit den Merkmalen des Hauptanspruchs. Vorteilhafte Ausgestaltungen und Weiterentwicklungen der Erfindung ergeben sich mit den Merkmalen der Unteransprüche.

Der vorgeschlagene optische Sensor zum Detektieren eines Stoffes umfasst also einen ersten Wellenleiter sowie einen über einen Richtkoppler optisch mit dem ersten Wellenleiter gekoppelten zweiten Wellenleiter, wobei der Sensor in einem Bereich des Richtkopplers eine funktionale Oberfläche zum An- oder Einlagern des zu detektierenden Stoffes aufweist, so dass eine Stärke einer durch den Richtkoppler vermittelten Kopplung zwischen dem ersten Wellenleiter und dem zweiten Wellenleiter durch das An- oder Einlagern dieses Stoffes veränderbar ist, wobei ferner zumindest der erste Wellenleiter über eine vom Richtkoppler umfasste Koppelstrecke frei schwebend, also einen Ausleger oder eine Brücke bildend, verläuft oder dort ausschließlich auf einem zumindest bereichsweise den Stoff aufnehmenden schwellfähigen Material ruht. Ein Richtkoppler sei dabei definiert als Bereich eines Ensembles zweier Wellenleiter, in dem diese so eng nebeneinander geführt sind, dass sich dort eine Kopplung durch eine Überlappung evaneszenter Felder der Wellenleiter ergibt. Die hier durch die frei schwebende oder auf dem schwellfähigen Material ruhende Anordnung des ersten Wellenleiters definierte Koppelstrecke kann sich dabei über den gesamten Richtkoppler erstrecken oder auch nur einen Teilabschnitt des Richtkopplers bilden. In dem speziellen Fall, dass beide genannten Wellenleiter aus in sich geschlossenen Ringen bestehen, kann sich die Koppelstrecke auch über den gesamten Wellenleiter erstrecken.

Wenn dieser optische Sensor, genauer die funktionale Oberfläche des Sensors, mit dem zu detektierenden Stoff in Kontakt gebracht wird, ändert sich also durch das An- oder Einlagern des Stoffes an oder durch die funktionale Oberfläche die Kopplung zwischen den beiden genannten Wellenleitern, was wiederum ein von den Wellenleitern transportiertes optisches Signal so beeinflusst, dass sich durch eine Detektion eines optischen Ausgangssignals feststellen lässt, ob und in welchen Mengen der zu detektierende Stoff mit der funktionalen Oberfläche in Kontakt gekommen ist.

Dazu kann der zweckmäßigerweise als integrierte Optik ausgeführte oder eine integrierte Optik umfassende Sensor einen mit einer Lichtquelle, beispielsweise einer Laserdiode, gekoppelten Zuführungswellenleiter und einen mit einem lichtempfindlichen Element, beispielsweise einer Fotodiode, gekoppelten Ausgangswellenleiter umfassen. Dabei kann der Zuführungswellenleiter durch den ersten Wellenleiter oder den zweiten Wellenleiter gegeben sein, womit sich ein verhältnismäßig einfacher Aufbau ergibt. In anderen Ausführungen der Erfindung kann der Zuführungswellenleiter auch lediglich optisch mit dem ersten Wellenleiter oder dem zweiten Wellenleiter gekoppelt sein, beispielsweise über einen weiteren Richtkoppler. Dadurch lässt sich unter Umständen eine Sensitivität einer durch die Wellenleiter gebildeten Auslesevorrichtung des Sensors erhöhen. In gleicher Weise kann der Ausgangswellenleiter dementsprechend durch den zweiten Wellenleiter oder den ersten Wellenleiter gegeben sein oder alternativ lediglich optisch mit dem zweiten Wellenleiter oder dem ersten Wellenleiter gekoppelt sein, beispielsweise über einen weiteren Richtkoppler.

Sofern der erste Wellenleiter und/oder der zweite Wellenleiter nicht als Zuführungswellenleiter oder als Ausgangswellenleiter dient, sondern mit diesen lediglich optisch gekoppelt ist, kann der erste Wellenleiter und/oder der zweite Wellenleiter auch als in sich geschlossener Wellenleiterring ausgeführt sein. Ein solcher Wellenleiterring zeigt Resonanzeigenschaften, die dann sehr empfindlich von der Stärke der Kopplung zwischen dem ersten und dem zweiten Wellenleiter abhängen. Ein aus dem Ausgangswellenleiter ausgekoppeltes Messsignal zeigt dann eine besonders deutliche Abhängigkeit von der Menge oder Konzentration des mit der funktionalen Oberfläche in Kontakt gekommenen Stoffes.

Bevorzugte Ausführungen sehen vor, dass zumindest einer der genannten Wellenleiter als einmodiger Wellenleiter ausgeführt ist. Vorzugsweise gilt das für alle genannten Wellenleiter. Dadurch lassen sich Ungenauigkeiten vermeiden, die anderenfalls durch Laufzeitunterschiede zwischen verschiedenen Moden aufgrund einer Dispersion der Wellenleiter verursacht werden könnten. Als einmodig sei dabei ein Wellenleiter dann bezeichnet, wenn bezüglich einer transversalen Feldverteilung für die verwendete Polarisation, also insbesondere für mindestens eine von zwei möglichen Polarisationen, nur eine Mode im Wellenleiter Platz findet.

In einer Ausführung der Erfindung verläuft der erste Wellenleiter innerhalb der Koppelstrecke frei schwebend, wobei die typischerweise durch Beschichtung mit einem selektiven Rezeptor realisierte funktionale Oberfläche durch eine Oberflächenschicht dieses ersten Wellenleiters gebildet sein oder eine Oberflächenschicht des ersten Wellenleiters umfassen kann. Dabei sollte sich diese Oberflächenschicht zumindest über einen Teil der Koppelstrecke erstrecken. Außerhals der Erfindung kann dann eine Abhängigkeit der Kopplung zwischen dem ersten und dem zweiten Wellenleiter von der Menge des durch die funktionale Oberfläche absorbierten zu detektierenden Stoffs bereits dadurch erreicht werden, dass dieser Stoff ein evaneszentes Feld zumindest des ersten Wellenleiters beeinflusst.

Erfindungsgemäß ist der erste Wellenleiter in einer Umgebung der Koppelstrecke so geführt, dass sich ein Abstand zwischen dem ersten Wellenleiter und dem zweiten Wellenleiter dort durch eine Deformation oder Bewegung des ersten Wellenleiters oder eines auslenkbaren Trägers des ersten Wellenleiters verändern lässt. Die Kopplung zwischen dem ersten Wellenleiter und dem zweiten Wellenleiter kann daher in einfacher Weise durch eine Veränderung des Abstands zwischen diesen Wellenleitern verändert werden. Daher lässt sich ein einfaches und zuverlässiges Messprinzip realisieren, indem der Sensor so eingerichtet wird, dass das An- oder Einlagern des zu detektierenden Stoffes an oder durch die funktionale Oberfläche eine Veränderung des genannten Abstands bewirkt. Das kann auf verschiedene Weise realisiert werden, wie nachfolgend dargestellt wird. Dabei sei als Änderung des Abstandes zwischen den Wellenleitern in der vorliegend jeweils eine Änderung eines Abstandes zwischen einem Wellenleiterkern des ersten und einem Wellenleiterkern des zweiten Wellenleiters bezeichnet. Vorzugsweise ist der Sensor dabei so gestaltet, dass das An- oder Einlagern des zu detektierenden Stoffes eine statische Änderung des Abstandes, beispielsweise durch eine statische Auslenkung, zur Folge hat.

So kann die funktionale Oberfläche dazu eine Oberflächenschicht des auslenkbaren Trägers des ersten Wellenleiters umfassen - sofern der erste Wellenleiter von einem solchen Träger gehalten wird, der als Ausleger oder Cantilever ausgeführt sein kann. Die Deformation oder Bewegung des ersten Wellenleiters, die eine Abstandsänderung zwischen dem ersten Wellenleiter und dem zweiten Wellenleiter zur Folge hat, kann dann durch eine mechanische Spannung im ersten Wellenleiter oder im Träger des ersten Wellenleiters - typischerweise aufgrund einer veränderten Oberflächenspannung - verursacht werden, die wiederum durch den an oder in der funktionalen Oberfläche an- oder eingelagerten zu detektieren Stoff verursacht wird. Die funktionale Oberfläche wird dabei vorzugsweise durch eine nur auf einer Seite des Cantilevers und/oder des ersten Wellenleiters aufgetragene und jedenfalls durch eine asymmetrische Beschichtung realisiert, damit das An- oder Einlagern des zu detektierenden Stoffes eine Deformation bewirkt.

In einer alternativen Ausgestaltung von Ausführungen des Sensors, bei denen der erste Wellenleiter deformierbar oder beweglich ist, kann die funktionale Oberfläche durch ein schwellfähiges Material gebildet werden, das in diesem Fall den ersten Wellenleiter oder einen Teil des ersten Wellenleiters trägt und zumindest bereichsweise zur Aufnahme des zu detektierenden Stoffes geeignet ist. Dann kann eine Bewegung oder Deformation des ersten Wellenleiters, mit der sich die Kopplung zwischen dem ersten und dem zweiten Wellenleiter ändert, dadurch verursacht werden, dass der zu detektierende Stoff in das schwellfähige Material eingelagert wird und dadurch eine Volumenänderung oder ein Schwellen des schwellfähigen Materials hervorgerufen wird. Als schwellfähiges Material kann dabei z.B. ein Polymer verwendet werden, das ein bestimmtes Lösungsmittel aufnehmen kann und dadurch anschwillt. Wenn der erste Wellenleiter im Zusammenhang mit der zuletzt bezeichneten Ausführung der Erfindung als ausschließlich auf dem schwellfähigen Material ruhend bezeichnet wird, schließt das natürlich nicht aus, dass das schwellfähige Material seinerseits auf einer festen Unterlage aufliegt. Auch könnte zwischen dem schwellfähigen Material und einem Kern des ersten Wellenleiters eine weitere Materiallage angeordnet sein. Entscheidend ist die Beweglichkeit des ersten Wellenleiters in Abhängigkeit von einem An- oder Abschwellen des genannten schwellfähigen Materials.

Ein einfacher Aufbau des Sensors ergibt sich, wenn er ein Substrat umfasst, das den ersten und den zweiten Wellenleiter trägt. Bei diesem Substrat kann es sich z.B. um ein Halbleitersubstrat handeln, das wiederum durch einen Teil eines typischerweise aus Silizium gebildeten Wafers gegeben sein kann. Die Wellenleiter sind dann typischerweise zumindest durch eine Pufferschicht, beispielsweise aus SiO₂, vom Substrat getrennt. Diese Pufferschicht kann im Bereich des Richtkopplers so ausgespart sein, dass dort zumindest der erste Wellenleiter unterhöhlt ist, um im Bereich der Koppelstrecke frei schwebend eine möglichst große Angriffsfläche für den zu detektierenden Stoff zu bilden und/oder den nötigen Bewegungsspielraum zu haben.

Der erste Wellenleiter und der zweite Wellenleiter können in einer einzigen Ebene verlaufen oder alternativ in zwei durch eine Pufferschicht voneinander getrennten Ebenen, wobei diese Pufferschicht wieder beispielsweise aus SiO₂ gebildet sein kann. Durch eine Anordnung in einer einzigen Ebene lässt sich ein besonders einfacher Aufbau realisieren, während eine Anordnung in zwei Ebenen unter Umständen einen geringeren Abstand zwischen dem ersten und dem zweiten Wellenleiter einzuhalten erlaubt, was im Hinblick auf eine möglichst starke Kopplung von Vorteil sein kann.

Ausführungsbeispiele der Erfindung werden nachfolgend unter Bezugnahme auf die Figuren 1 bis 21 erläutert.

Es zeigen
- Fig. 1: eine Aufsicht auf einen Ausschnitt eines optischen Sensors in einer Ausführung der Erfindung,
- Fig. 2: einen Querschnitt durch den optischen Sensor aus Fig. 1 an einer dort mit A-A gekennzeichneten Stelle,
- Fig. 3: eine der Fig. 1 entsprechende Darstellung eines optischen Sensors in einer anderen Ausführung der Erfindung,
- Fig. 4: einen Querschnitt durch den optischen Sensor aus Fig. 3 an einer dort mit A-A gekennzeichneten Stelle,
- Fign. 5 bis 11: jeweils eine Aufsicht auf einen Ausschnitt eines optischen Sensors in verschiedenen weiteren Ausführungsbeispielen, wobei dort jeweils nur von dem abgebildeten Sensor umfasste Wellenleiter sowie ein Umriss eines Fensters gezeigt sind, innerhalb dessen eine Pufferschicht ausgespart ist,
- Fign. 12 bis 17: jeweils eine Aufsicht (links im Bild) und einen in der Aufsicht mit A-A gekennzeichneten Querschnitt (rechts im Bild) eines Ausschnitts eines optischen Sensors in weiteren Ausführungsformen, wobei nur von diesen optischen Sensoren umfasste Wellenleiter gezeigt sind,
- Fig. 18: in einer den Fign. 5 bis 11 entsprechenden Darstellung ein weiteres Ausführungsbeispiel für einen optischen Sensor,
- Fig. 19: ein konstruktives Detail der optischen Sensoren aus den Fign. 11 - 17 (links im Bild) und einer Abwandlung eines entsprechenden optischen Sensors (rechts im Bild), wobei für die Abwandlung auch ein Querschnitt (ganz rechts) an einer in der Aufsicht mit A-A gekennzeichneten Stelle abgebildet ist, und
- Fign. 20 und 21: jeweils eine Aufsicht (links im Bild) und einen Querschnitt an einer in der Aufsicht mit A-A gekennzeichneten Stelle (rechts im Bild) eines optischen Sensors in zwei weiteren Ausführungen der Erfindung.

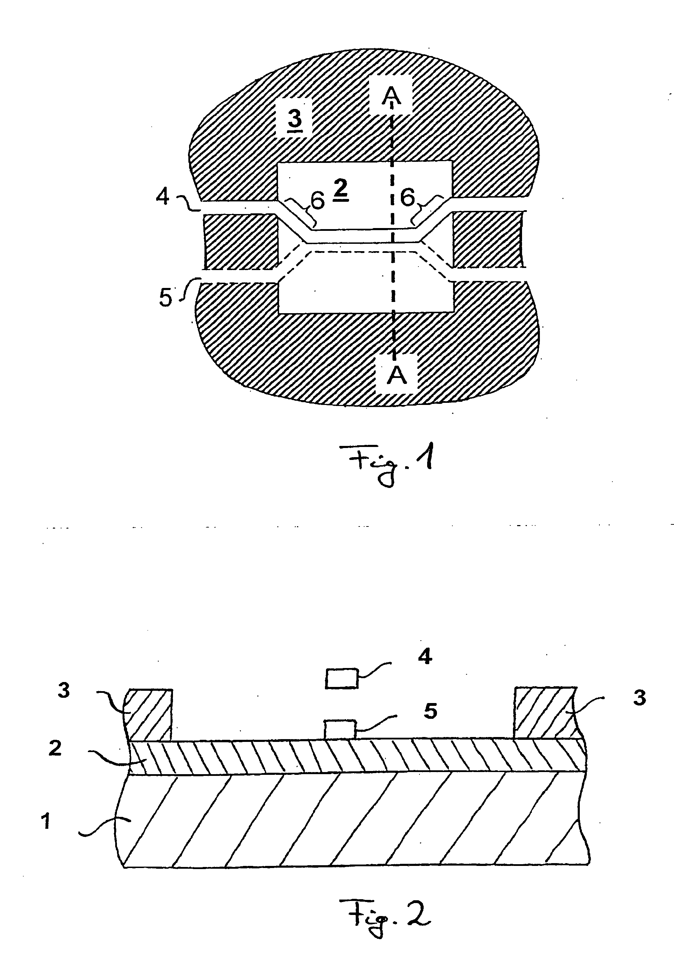

Der optische Sensor, von dem in den Fign. 1 und 2 jeweils ein Ausschnitt gezeigt ist, bildet, wie auch alle weiteren hier beschriebenen optischen Sensoren, eine integrierte Optik, die durch weitere Komponenten, wie beispielsweise eine Lichtquelle oder ein lichtempfindliches Element und eine Auswerteelektronik, ergänzt sein kann. Aufgebaut ist dieser Sensor auf einem Substrat 1, bei dem es sich um einen Teil eines Siliziumwafers handelt. Über dem Substrat 1 ist eine Pufferschicht aus SiO₂ angeordnet, die bei dem Ausführungsbeispiel aus den Fign. 1 und 2 eine weitere Pufferschicht 3 aus dem gleichen Material trägt.

Der optische Sensor weist einen ersten optischen Wellenleiter 4 und einen zweiten optischen Wellenleiter 5 auf, wobei der erste Wellenleiter 4 von der weiteren Pufferschicht 3 getragen wird, während der zweite Wellenleiter 5 auf der darunter liegenden Pufferschicht 2 ruht. An einer Stelle, an der die weitere Pufferschicht 3 ausgespart ist und ein Fenster bildet, so dass der erste Wellenleiter 4 dort frei schwebend verläuft und eine Brücke bildet, sind die Wellenleiter 4 und 5 in engem Abstand parallel zueinander geführt, im vorliegenden Ausführungsbeispiel übereinander. Dadurch ergibt sich eine optische Kopplung der Wellenleiter 4 und 5, die so innerhalb des Fensters in der Pufferschicht 3 einen Richtkoppler bilden.

Zumindest in Abschnitten 6 weist der erste Wellenleiter 4 eine funktionale Oberfläche auf, die dadurch realisiert ist, dass der erste Wellenleiter 4 dort an einer Oberseite oder Unterseite eine Beschichtung aus einem selektiven Rezeptor trägt. Die funktionale Oberfläche zeichnet sich dadurch aus, dass sie bevorzugt oder ausschließlich einen speziellen zu detektierenden Stoff adsorbiert. Wenn der optische Sensor - genauer die funktionale Oberfläche in den Abschnitten 6 - mit diesem Stoff in Kontakt kommt, lagert sich der zu detektierende Stoff dort an, was eine mechanische Spannung und damit eine Deformation des ersten Wellenleiters 4 nach sich zieht. Dabei ist der erste Wellenleiter 4 im Bereich des Richtkopplers, der eine Koppelstrecke definiert, so geführt, dass sich ein Abstand zwischen den Wellenleitern 4 und 5 dort durch eine solche Deformation verändert. Damit wiederum ändert sich eine Stärke der optischen Kopplung zwischen dem ersten Wellenleiter 4 und dem zweiten Wellenleiter 5.

Der so weit beschriebene optische Sensor kann daher zum Detektieren des genannten Stoffes benutzt werden, indem der erste Wellenleiter 4 als Zuführungswellenleiter verwendet und mit einer Lichtquelle, beispielsweise einer Laserdiode, verbunden wird, während der zweite Wellenleiter 5 als Ausgangswellenleiter verwendet und an einem Ende mit einem lichtempfindlichen Element, beispielsweise einer Fotodiode, gekoppelt wird. Ein von dem lichtempfindlichen Element detektiertes Signal wird dann sehr empfindlich von der Stärke der Kopplung zwischen den beiden Wellenleitern 4 und 5 abhängen und damit von einem Vorhandensein oder Fehlen oder genauer von einer Konzentration des zu detektierenden Stoffes in einer unmittelbaren Umgebung der funktionalen Oberfläche auf dem ersten Wellenleiter 4. Selbstverständlich können bezüglich ihrer Verwendung als Zuführungswellenleiter und als Ausgangswellenleiter die Wellenleiter 4 und 5 auch vertauscht werden.

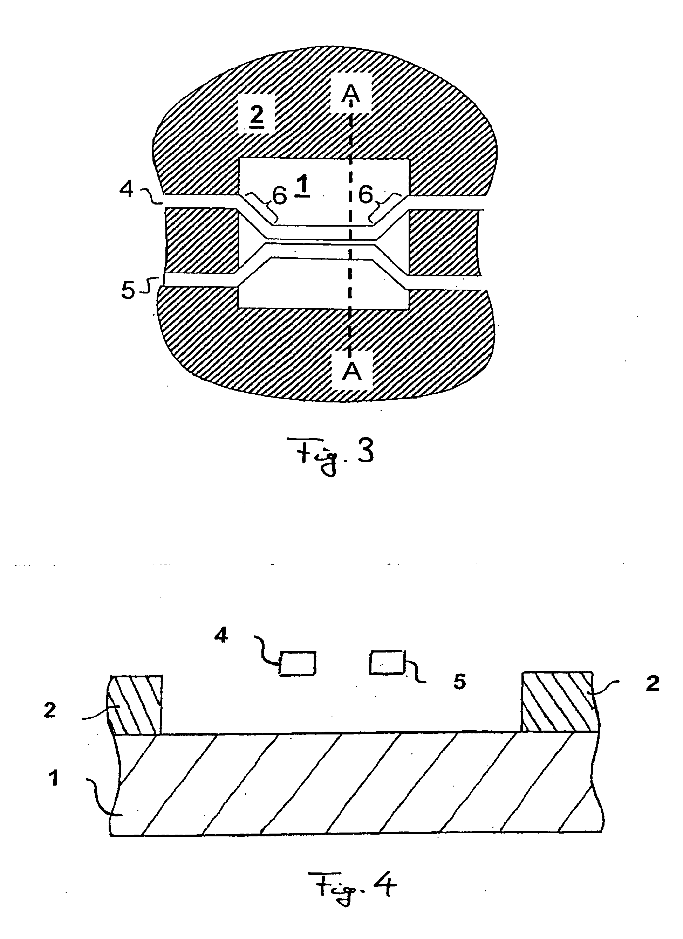

Ein ähnliches Ausführungsbeispiel eines optischen Sensors ist in den Fign. 3 und 4 dargestellt, wobei wiederkehrende Merkmale hier und nachfolgend wieder mit denselben Bezugszeichen versehen sind und nicht mehr für jedes Ausführungsbeispiel im Einzelnen beschrieben werden. Der optische Sensor aus den Fign. 3 und 4 unterscheidet sich von dem zuvor beschriebenen Ausführungsbeispiel dadurch, dass die beiden Wellenleiter 4 und 5 nicht in zwei verschiedenen, durch die weitere Pufferschicht 3 voneinander getrennten Ebenen verlaufen, sondern in einer einzigen Ebene, die durch eine einzige Pufferschicht 2 von dem Substrat 1 getrennt ist. Auch hier bilden der erste Wellenleiter 4 und der zweite Wellenleiter 5 einen Richtkoppler, wobei die beiden Wellenleiter 4 und 5 dort nicht übereinander, sondern nebeneinander geführt sind. Ansonsten entspricht der optische Sensor aus den Fign. 3 und 4 in seiner Funktion dem zuvor beschriebenen Sensor. Insbesondere trägt auch hier zumindest der erste Wellenleiter 4 innerhalb des Fensters, das hier in der Pufferschicht 2 ausgespart ist und den Bereich des Richtkopplers definiert, zumindest stellenweise eine Beschichtung, die eine funktionale Oberfläche im zuvor erläuterten Sinn bildet.

Bei den Wellenleitern 4 und 5 der beschriebenen Ausführungsbeispiele handelt es sich, wie auch bei sämtlichen Wellenleitern aus den nachfolgend beschriebenen optischen Sensoren, um einmodige Wellenleiter, deren Querschnitt so bemessen ist, dass dort für jede Polarisationsrichtung nur eine Mode propagieren kann.

Eine Abwandlung der Ausführungsbeispiele aus den Fign. 1 bis 4 sieht vor, dass der erste Wellenleiter 4 im Bereich des Richtkopplers, also innerhalb des Fensters in der jeweiligen Pufferschicht 3 oder 2, nicht frei schwebend verläuft, sondern dort stattdessen auf einem schwellfähigen Material ruht, das dann einen Raum zwischen den Wellenleitern 4 und 5, wenn der erste Wellenleiter 4 über den zweiten Wellenleiter 5 geführt ist, oder zwischen dem ersten Wellenleiter 4 und dem Substrat 1 ausfüllt. In diesem Fall bildet das schwellfähige Material anstelle einer Beschichtung des ersten Wellenleiters 4 eine funktionale Oberfläche zum Einlagern des zu detektierenden Stoffes in dem schwellfähigen Material, bei dem es sich beispielsweise um ein Polymer handeln kann. Ein Kontakt der funktionalen Oberfläche des schwellfähigen Materials mit dem zu detektierenden Stoff führt dann zu einer Volumenänderung des schwellfähigen Materials, das anschwillt und dadurch den ersten Wellenleiter 4 anhebt und dessen Abstand zum zweiten Wellenleiter 5 vergrößert. Auch in diesem Fall hat der Kontakt mit dem zu detektierenden Stoff zur Folge, dass sich die Stärke der Kopplung zwischen den beiden Wellenleitern 4 und 5 ändert, was zum Detektieren des Stoffes in zuvor beschriebener Weise ausgenutzt werden kann.

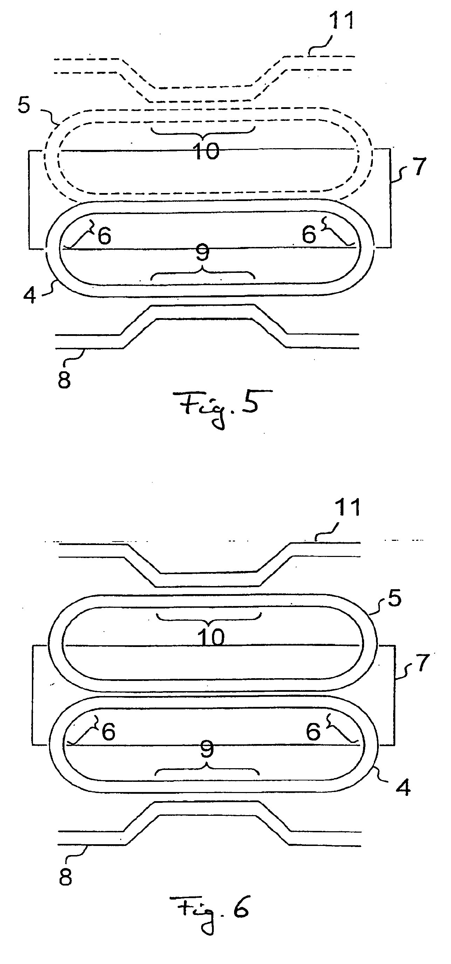

Der in Fig. 5 gezeigte Sensor entspricht in seinem Aufbau weitgehend dem Sensor aus den Fign. 1 und 2, wobei der erste Wellenleiter 4 und der zweite Wellenleiter 5 hier jedoch abweichend jeweils als in sich geschlossener Wellenleiterring ausgeführt sind. Zusätzlich ist ein mit dem ersten Wellenleiter 4 in einer Ebene verlaufender Zuführungswellenleiter 8 vorgesehen, der an einem Ende mit einer nicht abgebildeten Lichtquelle gekoppelt ist und über einen weiteren Richtkoppler 9 mit dem ersten Wellenleiter 4 gekoppelt ist, um in diesen Licht einzuspeisen. In entsprechender Weise ist der zweite Wellenleiter 5 über einen zusätzlichen Richtkoppler 10 mit einem als selbständiger Wellenleiter ausgeführten Ausgangswellenleiter 11 gekoppelt, mit dem in diesem Fall das ebenfalls nicht abgebildete lichtempfindliche Element verbunden ist.

Der erste Wellenleiter 4 und der zweite wellenleiter 5 bilden bei diesem Ausführungsbeispiel jeweils einen Mikroringresonator, wobei die Kopplung zwischen diesen Mikroringresonatoren zu einer Aufspaltung optischer Resonanzen symmetrischer oder antisymmetrischer Gesamtmodenverteilungen führt. Die Veränderung der Kopplung durch eine Deformation zumindest des ersten Wellenleiters 4 in zuvor beschriebener Weise führt hier zu einer Veränderung einer Aufspaltungsfrequenz, welche über ein aus dem Ausgangswellenleiter 11 ausgekoppeltes Messsignal messbar ist.

Anstelle des Ausgangswellenleiters 11, der auch wegfallen könnte, kann auch der Zuführungswellenleiter 8 selbst zum Auskoppeln des Messsignals verwendet werden. Analog gilt übrigens auch für die zuvor beschriebenen Ausführungsbeispiele, dass das lichtempfindliche Element zum Detektieren des Messsignals an einem Ausgang des ersten Wellenleiters 4 anstelle eines Endes des zweiten Wellenleiters 5 angeordnet sein könnte.

Das in Fig. 6 dargestellte Ausführungsbeispiel unterscheidet sich von dem Sensor aus Fig. 5 lediglich durch die Anordnung aller Wellenleiter, also des ersten Wellenleiters 4, des zweiten Wellenleiters 5, des Zuführungswellenleiters 8 und des Ausgangswellenleiters 11, in einer einzigen Ebene, so dass dieser Sensor in einem Bereich des Richtkopplers zwischen den Wellenleitern 4 und 5 einen der Fig. 4 entsprechenden Querschnitt hat anstelle eines Querschnitts der in Fig. 2 gezeigten Art. Auch hier ist der erste Wellenleiter 4 zumindest in Abschnitten 6 mit einer Beschichtung versehen, die dort eine funktionale Oberfläche bildet. Dabei können die Wellenleiter 4 und 5 selbstverständlich auch bezüglich ihrer Funktionen vertauscht werden oder beide mit einer entsprechenden Beschichtung versehen sein.

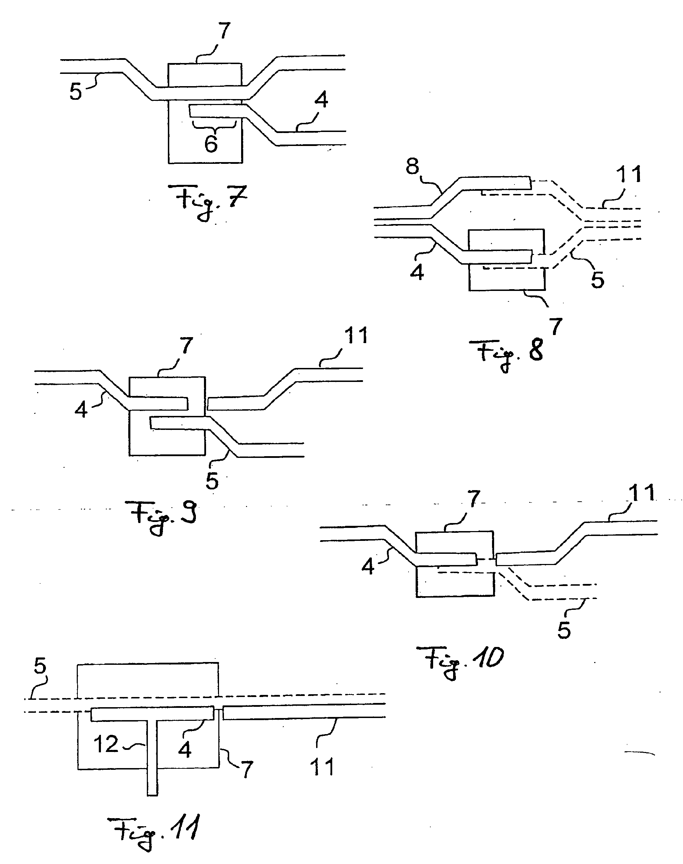

In Fig. 7 ist eine Aufsicht auf einen optischen Sensor in einer weiteren Ausführung der Erfindung gezeigt. Dieser Sensor hat ebenfalls einen der Fig. 4 entsprechenden Querschnitt. Dabei bildet der erste Wellenleiter 4, der hier als Ausgangswellenleiter fungiert, abweichend von dem zweiten Wellenleiter 5, der hier mit der nicht abgebildeten Lichtquelle verbunden ist, keine Brücke, sondern lediglich einen nur an einem Ende aufgehängten Ausleger oder Cantilever, und zwar in dem Abschnitt 6, in dem der erste Wellenleiter 4 die funktionale Oberfläche aufweist, die zu einer Verbiegung des Auslegers im Fall eines Anlagerns des zu detektierenden Stoffs führt.

Weitere Ausführungsbeispiele sind in entsprechender Darstellung in den Fign. 8 bis 10 abgebildet, wobei tiefer liegende Wellenleiter immer mit gestrichelter Umrandung dargestellt sind. Die Sensoren aus den Fign. 8 und 10 zeigen dabei einen Querschnitt, der Fig. 2 entspricht, während der Sensor aus Fig. 9 einen Querschnitt der in Fig. 4 gezeigten Art hat. Der Sensor aus Fig. 8 weist neben einem durch den ersten Wellenleiter 4 und dem zweiten Wellenleiter 5 gebildeten optischen Pfad einen weiteren optischen Pfad auf, der entsprechend geführt ist, aber eine unveränderliche Kopplung zwischen einem Zuführungswellenleiter 8 und einem Ausgangswellenleiter 11 aufweist. Die Sensoren aus den Fign. 9 und 10 zeigen jeweils einen zusätzlichen Ausgangswellenleiter 11, derüber eine Stoßkopplung mit dem ersten Wellenleiter 4 verbunden ist und so eine zusätzliche Detektion einer Auslenkung oder Deformation des ersten Wellenleiters 4 erlaubt.

Ein weiteres Ausführungsbeispiel mit einem in einer höheren Ebene liegenden ersten Wellenleiter 4 und einem darunter liegenden zweiten Wellenleiter 5 ist in Fig. 11 dargestellt. Auch bei diesem Ausführungsbeispiel verläuft der erste Wellenleiter 4, der vollständig innerhalb des Fensters mit dem Umriss 7 liegt, frei schwebend, wozu er in diesem Fall von einem auslenkbaren Träger 12 gehalten wird. Anstelle des ersten Wellenleiters 4 ist hier der Träger 12 mit der die funktionale Oberfläche bildenden Beschichtung versehen, typischerweise an einer Oberseite. Ein Kontakt mit dem zu detektierenden Stoff führt hier zu einem verbiegen des Trägers 12, was wiederum eine Änderung des Abstands zwischen dem ersten Wellenleiter 4 und dem zweiten Wellenleiter 5 zur Folge hat. Ein Messsignal kann hier einem zweiten Ende des zweiten Wellenleiters 5 entnommen werden oder alternativ oder zusätzlich einem Ende eines zusätzlichen Ausgangswellenleiters 11, der über eine Stoßkopplung mit dem ersten Wellenleiter 4 verbunden sein kann. Auch diese Stoßkopplung wird sich mit einer Auslenkung des Trägers 12 ändern, was zu einer weiteren Beeinflussung eines Ausgangssignals durch die sich an der funktionalen Oberfläche anlagernde Substanz führt.

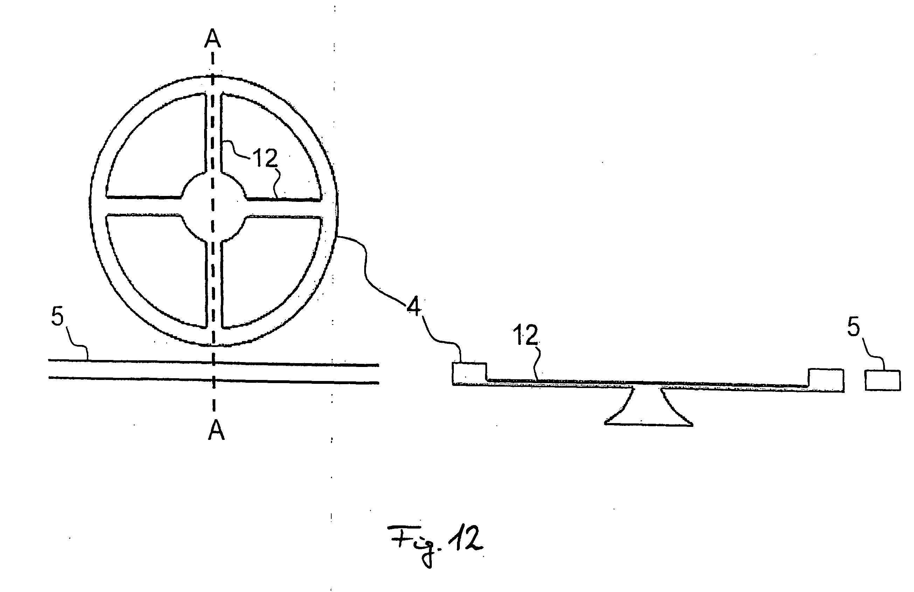

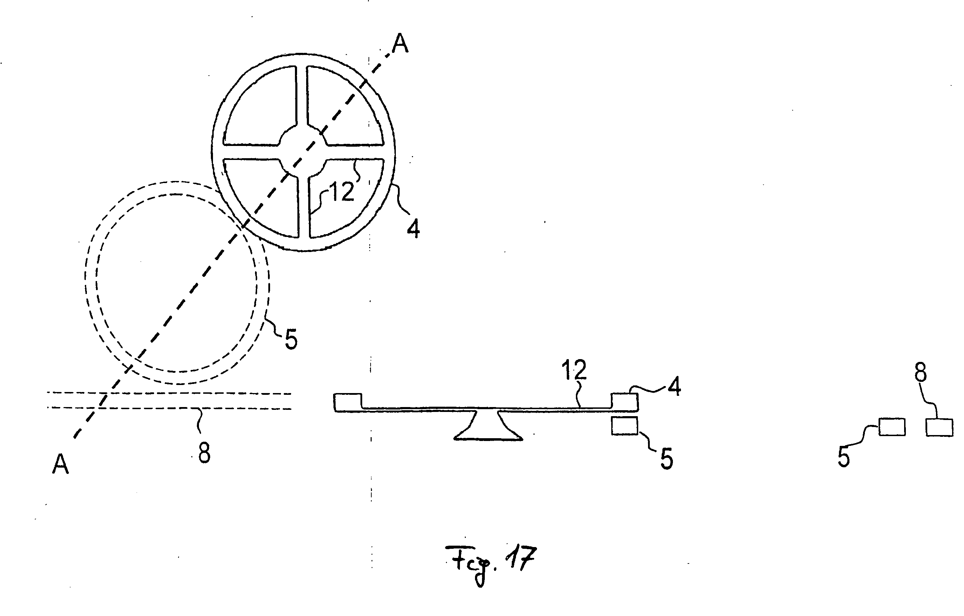

In den Fign. 12 bis 17 ist für verschiedene Ausführungsbeispiele von optischen Sensoren vorgeschlagener Art jeweils links im Bild eine Aufsicht und rechts im Bild ein Querschnitt durch eine Wellenleiteranordnung des entsprechenden Sensors gezeigt. Alle diese Sensoren weisen wieder einen ersten Wellenleiter 4 auf, der über einen Richtkoppler mit einem zweiten Wellenleiter 5 gekoppelt ist, wobei die Stärke einer Kopplung zwischen dem ersten Wellenleiter 4 und dem zweiten Wellenleiter 5 von der Menge eines an einer funktionalen Oberfläche angelagerten zu detektierenden Stoffes abhängt. Dabei ist der erste Wellenleiter 4 bei diesen Ausführungsbeispielen jeweils durch einen in sich geschlossenen Wellenleiterring gegeben, der durch einen innerhalb des Wellenleiterrings angeordneten Träger 12 mit vier Armen gehalten wird und ansonsten frei schwebend verläuft. Die vier Arme des Trägers 12 sind an einer Oberseite mit einer Beschichtung beschriebener Art versehen und bilden dadurch eine funktionale Oberfläche zum Anlagern des zu detektierenden Stoffes. Bei diesen Ausführungsbeispielen führt eine Adsorption dieses Stoffes durch die funktionale Oberfläche zu einem Anheben oder einem Absenken des ersten Wellenleiters 4, womit sich die Stärke der Kopplung zwischen dem ersten Wellenleiter 4 und dem zweiten Wellenleiter 5 ändert.

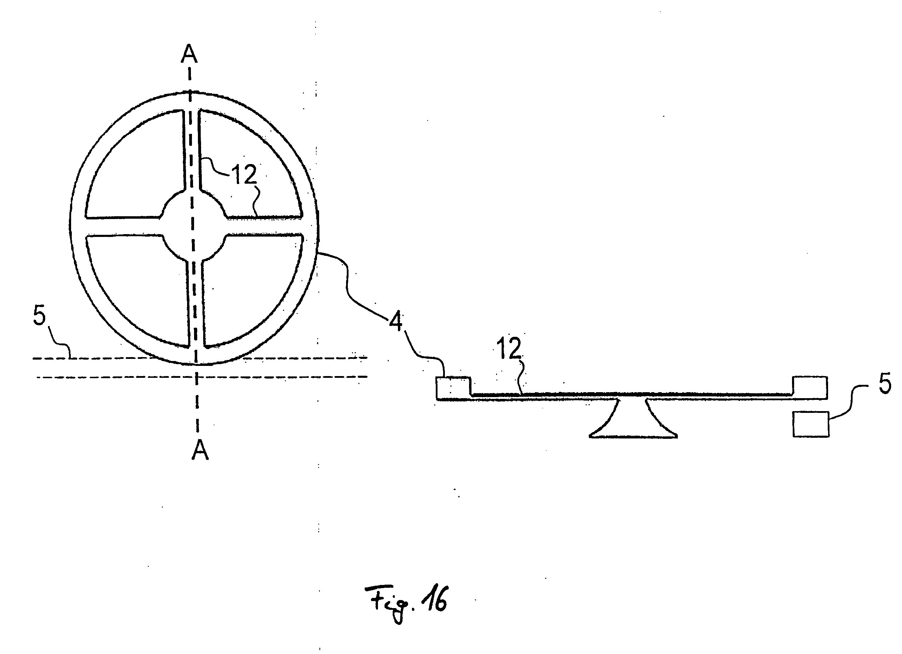

Bei den Ausführungsbeispielen aus den Fign. 12 und 16 dient der zweite Wellenleiter 5 sowohl als Zuführungswellenleiter, in den Licht einer nicht abgebildeten Lichtquelle eingespeist wird, als auch als Ausgangswellenleiter, wozu er an einem anderen Ende mit einem ebenfalls nicht abgebildeten lichtempfindlichen Element verbunden ist. Ein dort zu detektierendes Signal hängt von der Stärke der Kopplung zum ersten Wellenleiter 4 ab und lässt damit Rückschlüsse auf die Menge des an der funktionalen Oberfläche adsorbierten Stoffs zu.

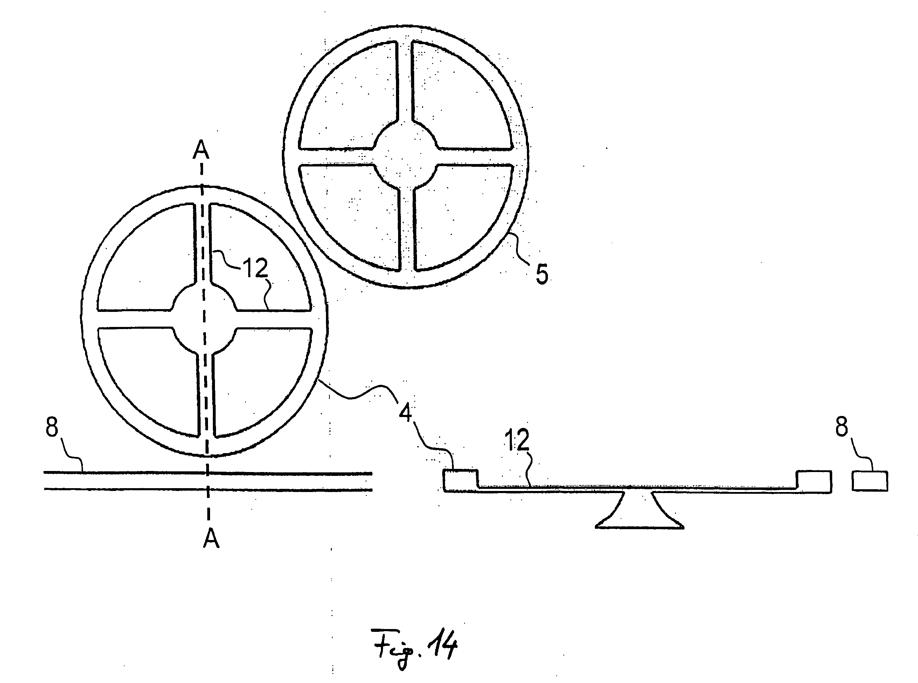

Das Ausführungsbeispiel aus Fig. 14 zeichnet sich dabei dadurch aus, dass ein zusätzlicher Ringwellenleiter vorgesehen ist, der in ähnlicher Weise gehalten wird wie der erste Wellenleiter 4. Dieser Ringwellenleiter dient bei dieser Ausführung als zweiter Wellenleiter 5 und ist dementsprechend über einen Richtkoppler mit dem ersten Wellenleiter 4 gekoppelt. Zusätzlich ist der Wellenleiter 4 über einen weiteren Richtkoppler mit einem Zuführungswellenleiter 8 gekoppelt, in den Licht einer nicht abgebildeten Lichtquelle eingespeist wird, und der gleichzeitig als Ausgangswellenleiter zum Auskoppeln eines Messsignals dient. Die Abhängigkeit des aus dem zweiten Zuführungswellenleiter 8 ausgekoppelten Messsignals von der Lage des ersten Wellenleiters 4 wird hier verstärkt durch die Ausführung des ebenfalls mit einer funktionalen Oberfläche versehenen und beweglichen zweiten Wellenleiters 5 als Ringwellenleiter.

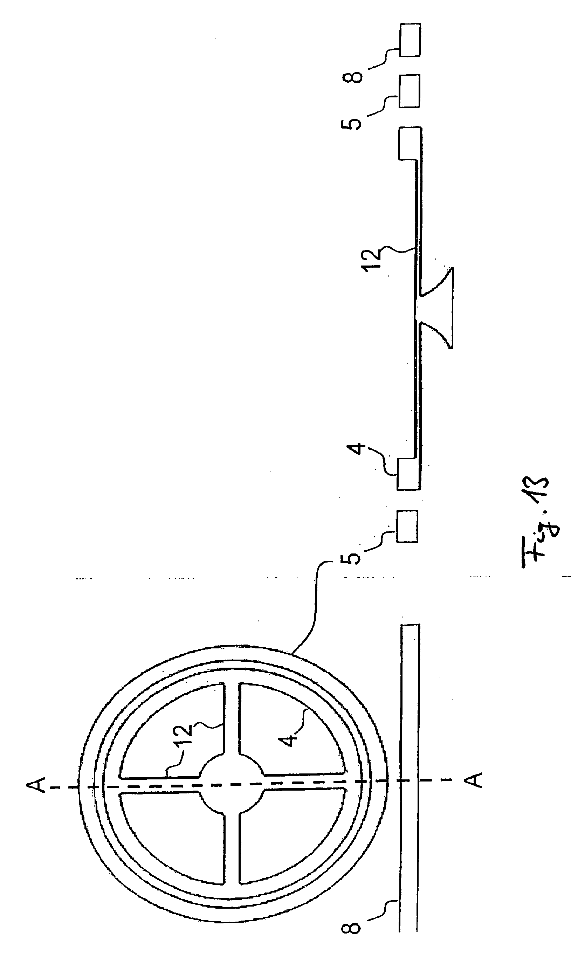

Bei den Ausführungsbeispielen aus den Fign. 13, 15 und 17 ist der zweite Wellenleiter 5, der über einen Richtkoppler mit dem ersten Wellenleiter 4 gekoppelt ist, als Wellenleiterring ausgeführt, der seinerseits über einen weiteren Richtkoppler mit einem zusätzlich vorgesehenen Zuführungswellenleiter 8 gekoppelt ist. Der Zuführungswellenleiter 8 dient bei diesen Ausführungsbeispielen sowohl zum Einspeisen von Licht aus einer nicht abgebildeten Lichtquelle als auch zum Auskoppeln eines Messsignals, das mit einem nicht abgebildeten lichtempfindlichen Element gemessen wird. Auch diese Anordnungen führen zu einer ausgesprochen empfindlichen Abhängigkeit des aus dem Zuführungswellenleiter 8 ausgekoppelten Messsignals von der Lage des ersten Wellenleiters 4, die sich mit einer Anlagerung des zu detektierenden Stoffs an der funktionalen Fläche ändert.

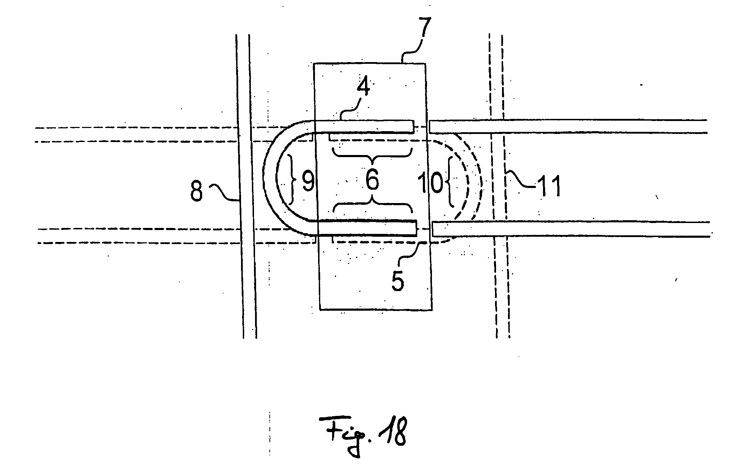

In Fig. 18 ist in einer den Fign. 5 bis 11 entsprechenden Darstellung ein weiteres Beispiel für einen ähnlichen optischen Sensor gezeigt, bei dem wiederkehrende Merkmale wieder mit denselben Bezugszeichen versehen sind. Hier ist der erste Wellenleiter 4 an zwei Stellen über jeweils einen Richtkoppler mit dem zweiten Wellenleiter 5 gekoppelt, wobei der erste Wellenleiter 4 in durch die Richtkoppler definierten Abschnitten 6 innerhalb eines Fensters einer Pufferschicht zwei Ausleger bildet und dort an einer Oberseite oder einer Unterseite eine funktionale Oberfläche im zuvor beschriebenen Sinn aufweist. Der erste Wellenleiter 4 ist über einen weiteren Richtkoppler 9 mit einem Zuführungswellenleiter 8 gekoppelt, während der darunter liegende zweite Wellenleiter 5 über einen zusätzlichen Richtkoppler 10 mit einem Ausgangswellenleiter 11 gekoppelt ist. Zusätzlich sind bei diesem Ausführungsbeispiel weitere Wellenleiter vorgesehen, die über Stoßkopplungen mit dem ersten Wellenleiter 4 oder dem zweiten Wellenleiter 5 gekoppelt sind und dadurch ein Auslesen weiterer Informationen erlauben.

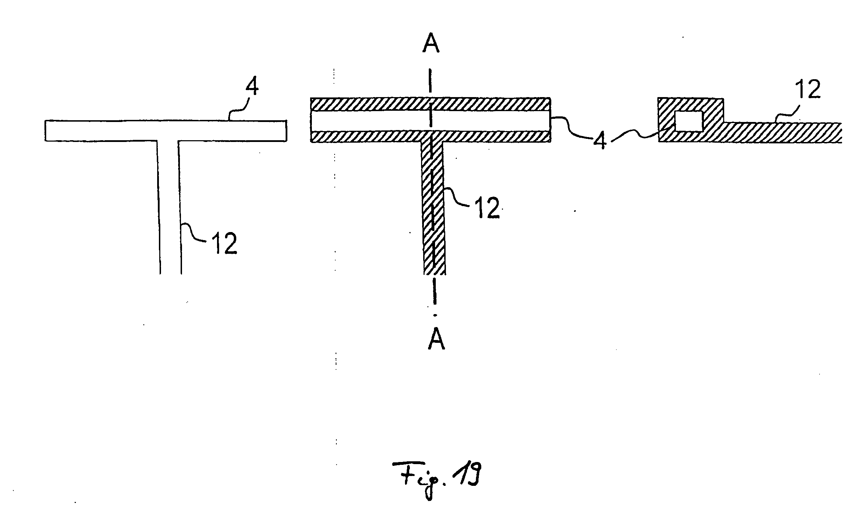

In Fig. 19 ist ein Ausschnitt eines Sensors der in Fig. 11 gezeigten Art in zwei verschiedenen Ausführungen dargestellt. Gezeigt ist jeweils der erste Wellenleiter 4, der von einem Träger 12 in Form eines auslenkbaren Arms gehalten wird, wobei die funktionale Oberfläche des jeweiligen Sensors durch eine Beschichtung dieses Trägers 12 gegeben ist. Bei der in Fig. 19 links dargestellten Variante ist der Träger 12 aus dem selben Material gefertigt wie der erste Wellenleiter 4, beispielsweise aus Silizium. Bei der in Fig. 19 rechts dargestellten Variante, die zusätzlich zu einer Aufsicht auch in einem Querschnitt gezeigt ist, umfasst der erste Wellenleiter 4 einen Wellenleiterkern, der ebenfalls aus Silizium gebildet sein kann, wobei dieser Wellenleiterkern hier eingebettet ist in ein anderes Material, beispielsweise ein Polymer, aus dem auch der Träger 12 gebildet ist.

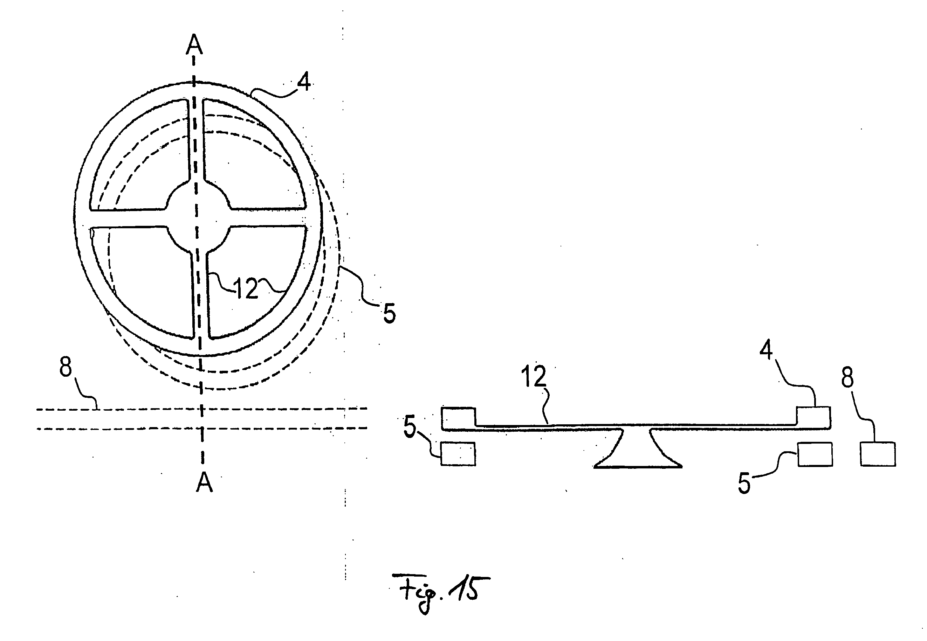

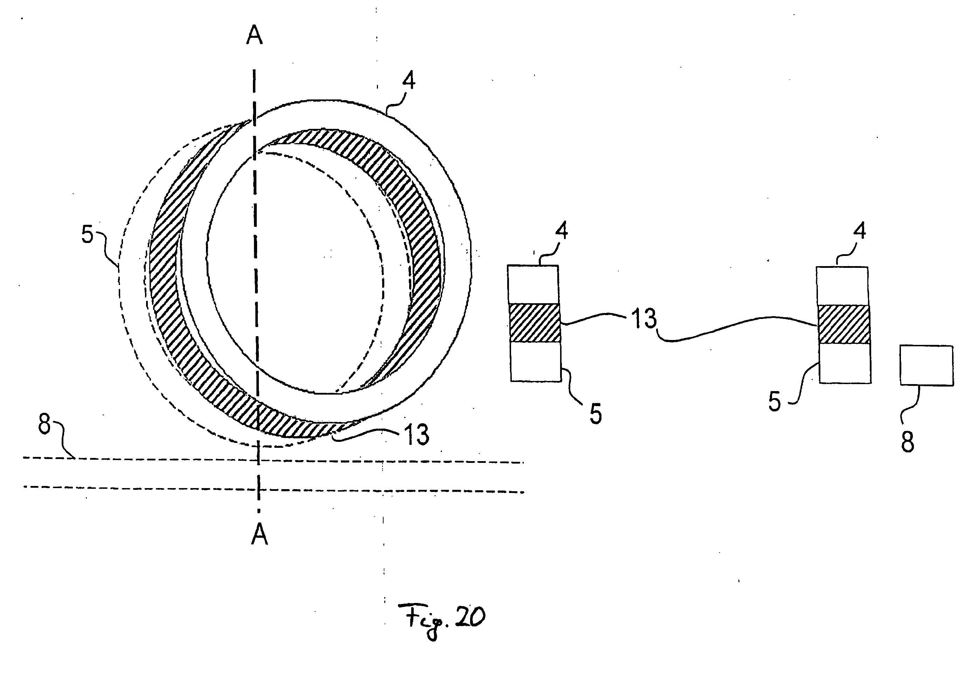

In Fig. 20 ist ein weiteres Ausführungsbeispiel eines optischen Sensors dargestellt, bei dem sowohl der erste Wellenleiter 4 als auch der zweite Wellenleiter 5 durch jeweils einen Wellenleiterring gebildet sind. Der ortsfest ausgeführte zweite Wellenleiter 5 ist über einen Richtkoppler mit einem Zuführungswellenleiter 8 gekoppelt, so dass dieser Sensor eine dem Ausführungsbeispiel aus Fig. 15 sehr ähnliche Topologie zeigt. Anders als dort ist der erste Wellenleiter 4 hier allerdings nicht frei schwebend ausgeführt, sondern ruht stattdessen ausschließlich auf einem schwellfähigen Material 13, das ihn vom zweiten Wellenleiter 5 trennt. Auch hier ändert sich der Abstand zwischen dem ersten Wellenleiter 4 und dem zweiten Wellenleiter 5 in Abhängigkeit davon, ob und in welcher Konzentration der Sensor mit dem zu detektierenden Stoff in Kontakt kommt. Dazu bildet hier das schwellfähige Material 13 die funktionale Oberfläche, durch die bei diesem Ausführungsbeispiel der zu detektierende Stoff in das schwellfähige Material 13 eingelagert wird, was eine Volumenänderung des schwellfähigen Materials 13 bewirkt. Mit der daraus resultierenden Abstandsänderung zwischen den Wellenleitern 4 und 5 geht wiederum eine Änderung der optischen Kopplung zwischen diesen Wellenleitern 4 und 5 einher, was ein aus dem Zuführungswellenleiter 8 ausgekoppeltes Messsignal in bereits beschriebener Weise beeinflusst und so eine Detektion des genannten Stoffes erlaubt.

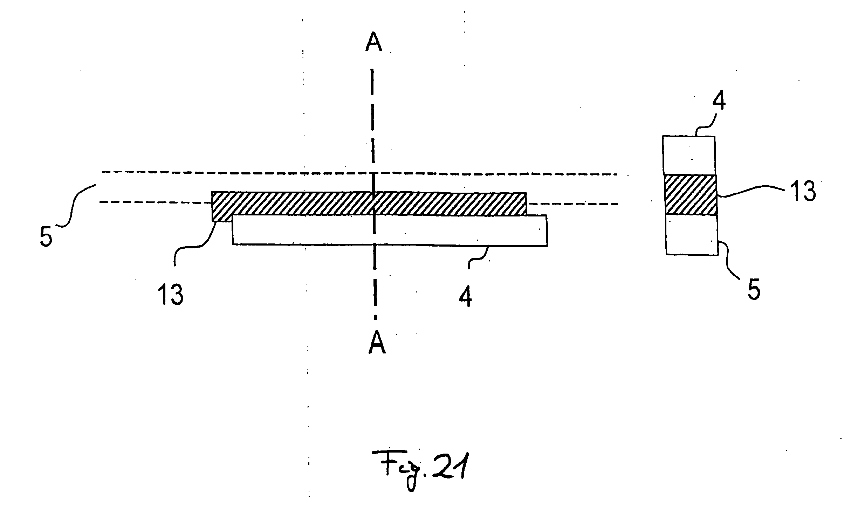

Fig. 21 schließlich zeigt eine Wellenleiteranordnung in einem letzten Ausführungsbeispiel, das eine dem Ausführungsbeispiel aus Fig. 20 entsprechende Schichtstruktur mit einem zwischen dem ersten Wellenleiter 4 und dem zweiten Wellenleiter 5 angeordneten schwellfähigen Material 13 zeigt. Hier haben sowohl der erste Wellenleiter 4 als auch der zweite Wellenleiter 5 einen geraden Verlauf, wobei der zweite Wellenleiter 5 gleichzeitig als Zuführungswellenleiter und als Ausgangswellenleiter dient und dazu an jeweils einem Ende mit einer nicht abgebildeten Lichtquelle sowie einem ebenfalls nicht abgebildeten lichtempfindlichen Element gekoppelt ist. Als schwellfähiges Material 13 kann bei den Ausführungsbeispielen aus den Fign. 20 und 21 jeweils ein Polymer verwendet werden, das z.B. für einen bestimmten Lösungsmitteltyp aufnahmefähig ist und so dessen Detektion erlaubt.

Die hier vorgeschlagene Bestimmung einer Änderung der evaneszenten Kopplungen zwischen Wellenleitern, von denen zumindest einer beweglich ist, erlaubt ein sehr genaues Auslesen eines Auslenkungszustands des beweglichen Wellenleiters, da die Koppelstärke bei evaneszenter Kopplung zwischen Wellenleitern exponentiell vom Abstand zwischen den Wellenleitern abhängt. Der Auslenkungszustand kann dabei durch eine Verbiegung der die Wellenleiter tragenden Cantilever oder der Wellenleiter selbst definiert sein, wobei diese Verbiegung z.B. durch Oberflächenspannungen verursacht sein kann, die wiederum durch spezifische Bindungsereignisse beeinflusst werden. Im Gegensatz zu den hier primär vorgeschlagenen Kopplungen über Richtkoppler sind bei Stoßkopplungen höhere Verluste augrund einer Propagation des jeweiligen Signals über eine gewisse Strecke als Freistrahl zu erwarten. Im Gegensatz zur Messung der Stoßkopplung ist bei einer Nutzung evaneszenter Kopplung auch eine gezielte Erhöhung der Empfindlichkeit durch Verlängern der Koppelstrecke möglich. Auch gegenüber einer Veränderung von Wellenleiterdimensionen durch spezifisches Anlagern von Fremdkörpern an die Wellenleiter zeigt ein Koppler hier vorgeschlagener Art eine hohe Empfindlichkeit. Diese Empfindlichkeit kann durch ein Einbetten der Kopplerstruktur in optische Resonatoren noch erhöht werden, beispielsweise durch Strukturen der in den Fign. 5 und 6 gezeigten Art.

Durch eine mit Sensoren vorgeschlagener Art mögliche Trennung einer komplexen Analyseeinheit von einer demgegenüber einfachen rein optischen Sensoreinheit kann eine Vielzahl von Sensoren nacheinander ausgelesen werden, womit kostengünstige Lösungen erreicht werden können. Auch wird durch die rein optische Ansteuerung der Sensoreinheiten eine Verwendung in Schutzbereichen möglich, die frei von elektrischen oder elektronischen Komponenten bleiben müssen.

## Patentansprüche

1. Optischer Sensor zum Detektieren eines Stoffes, umfassend einen ersten Wellenleiter (4) und einen über einen Richtkoppler optisch mit dem ersten Wellenleiter (4) gekoppelten zweiten Wellenleiter (5), **dadurch gekennzeichnet dass** der erste Wellenleiter (4) in einer Umgebung einer vom Richtkoppler umfassten Koppelstrecke so geführt ist, dass ein Abstand zwischen dem ersten Wellenleiter (4) und dem zweiten Wellenleiter (5) dort durch eine Deformation oder Bewegung des ersten Wellenleiters (4) oder eines Trägers (12) des ersten Wellenleiters (4) veränderbar ist,
wobei der Sensor eine funktionale Oberfläche zum An- oder Einlagern des zu detektierenden Stoffes aufweist und der Abstand zwischen dem ersten Wellenleiter und dem zweiten Wellenleiter durch An- oder Einlagern des zu detektierenden Stoffes an oder durch die funktionale Oberfläche veränderbar ist, so dass durch das An- oder Einlagern dieses Stoffes eine Stärke einer durch den Richtkoppler vermittelten Kopplung zwischen dem ersten Wellenleiter (4) und dem zweiten Wellenleiter (5) veränderbar ist,
wobei
- zumindest der erste Wellenleiter (4) über die Koppelstrecke frei schwebend verläuft und die funktionale Oberfläche eine Oberflächenschicht des ersten Wellenleiters (4) und/oder eines auslenkbaren Trägers (12), der den ersten Wellenleiter (4) hält, umfasst oder
- zumindest der erste Wellenleiter (4) innerhalb der Koppelstrecke ausschließlich auf einem den Stoff aufnehmenden schwellfähigen Material (13) ruht und die funktionale Oberfläche durch das schwellfähige Material (13) gebildet wird, das den ersten Wellenleiter (4) oder einen Teil der ersten Wellenleiters (4) trägt.

2. Sensor nach Anspruch 1, **dadurch gekennzeichnet, dass** er ein Substrat (1) umfasst, das den ersten und den zweiten Wellenleiter (4, 5) trägt.

3. Sensor nach Anspruch 2, **dadurch gekennzeichnet, dass** der erste Wellenleiter (4) und der zweite Wellenleiter (5) zumindest durch eine Pufferschicht (2, 3) vom Substrat (1) getrennt sind.

4. Sensor nach Anspruch 3, **dadurch gekennzeichnet, dass** die Pufferschicht (2; 3) im Bereich des Richtkopplers so ausgespart ist, dass dort zumindest der erste Wellenleiter (4) unterhöhlt ist.

5. Sensor nach einem der Ansprüche 1 bis 4, **dadurch gekennzeichnet, dass** der erste Wellenleiter (4) und der zweite Wellenleiter (5) in einer einzigen Ebene oder in zwei durch eine Pufferschicht (3) voneinander getrennten Ebenen verlaufen.

6. Sensor nach einem der Ansprüche 1 bis 5, **dadurch gekennzeichnet, dass** er einen mit einer Lichtquelle gekoppelten Zuführungswellenleiter (8) und einen mit einem lichtempfindlichen Element gekoppelten Ausgangswellenleiter (11) umfasst.

7. Sensor nach Anspruch 6, **dadurch gekennzeichnet, dass** der Zuführungswellenleiter (8) durch den ersten Wellenleiter (4) oder den zweiten Wellenleiter (5) gegeben ist oder optisch mit dem ersten Wellenleiter (4) oder dem zweiten Wellenleiter (5) gekoppelt ist.

8. Sensor nach einem der Ansprüche 6 oder 7, **dadurch gekennzeichnet, dass** der Ausgangswellenleiter (11) durch den zweiten Wellenleiter (5) oder den ersten Wellenleiter (4) gegeben ist oder optisch mit dem zweiten Wellenleiter (5) oder dem ersten Wellenleiter (4) gekoppelt ist.

9. Sensor nach einem der Ansprüche 1 bis 8, **dadurch gekennzeichnet, dass** der erste Wellenleiter (4) und/oder der zweite Wellenleiter (5) als in sich geschlossener Wellenleiterring ausgeführt ist.

10. Sensor nach einem der Ansprüche 1 bis 9, **dadurch gekennzeichnet, dass** der erste Wellenleiter (4) und/oder der zweite Wellenleiter (5) als einmodiger Wellenleiter ausgeführt ist.

11. Sensor nach einem der Ansprüche 1 bis 10, **dadurch gekennzeichnet**, das er eine integrierte Optik bildet oder umfasst.

## Claims

1. An optical sensor for detecting a substance, comprising a first waveguide (4) and a second waveguide (5) optically coupled via a directional coupler to the first waveguide (4), **characterized in that** the first waveguide (4) is guided in a vicinity of a coupling path comprised by the directional coupler such that a spacing between the first waveguide (4) and the second waveguide (5) is changeable there by a deformation or movement of the first waveguide (4) or of a carrier (12) of the first waveguide (4),
wherein the sensor has a functional surface for accumulating or storing the substance to be detected and the spacing between the first waveguide and the second waveguide is changeable by accumulating or storing the substance to be detected at or by the functional surface so that an intensity of a coupling between the first waveguide (4) and the second waveguide (5) mediated by the directional coupler can be changed by the accumulating or storing of this substance,
wherein
- at least the first waveguide (4) extends in a freely floating manner over the coupling path and the functional surface includes a surface layer of the first waveguide (4) and/or of a deflectable carrier (12) which holds the first waveguide (4) or
- at least the first waveguide (4) exclusively rests within the coupling path on a swellable material (13) absorbing the substance and the functional surface is formed by the swellable material (13) which carries the first waveguide (4) or a part of the first waveguide (4).

2. The sensor according to claim 1, **characterized in that** it comprises a substrate (1) which carries the first and second waveguides (4, 5).

3. The sensor according to claim 2, **characterized in that** the first waveguide (4) and the second waveguide (5) are separated at least by a buffer layer (2, 3) from the substrate (1).

4. The sensor according to claim 3, **characterized in that** the buffer layer (2; 3) is cut out in the region of the directional coupler so that at least the first waveguide (4) is undercut there.

5. The sensor according to one of claims 1 to 4, **characterized in that** the first waveguide (4) and the second waveguide (5) extend in a single plane or in two planes separated from one another by a buffer layer (3).

6. The sensor according to one of claims 1 to 5, **characterized in that** it includes a feed waveguide (8) coupled to a light source and an output waveguide (11) coupled to a light-sensitive element.

7. The sensor according to claim 6, **characterized in that** the feed waveguide (8) is given by the first waveguide (4) or by the second waveguide (5) or is optically coupled to the first waveguide (4) or to the second waveguide (5).

8. The sensor according to one of claims 6 or 7, **characterized in that** the output waveguide (11) is given by the second waveguide (5) or by the first waveguide (4) or is optically coupled to the second waveguide (5) or to the first waveguide (4).

9. The sensor according to one of claims 1 to 8, **characterized in that** the first waveguide (4) and/or the second waveguide (5) is configured as a waveguide ring closed in itself.

10. The sensor according to one of claims 1 to 9, **characterized in that** the first waveguide (4) and/or the second waveguide (5) is configured as a single-mode waveguide.

11. The sensor according to one of claims 1 to 10, **characterized in that** it forms or includes an integrated optical system.

## Revendications

1. Capteur optique pour la détection d'une substance, comprenant un premier guide d'onde (4) et un deuxième guide d'onde (5) couplé optiquement au premier guide d'onde (4) par le biais d'un coupleur directionnel, **caractérisé en ce que** le premier guide d'onde (4) est déplacé de telle façon dans un environnement d'un trajet de couplage compris par le coupleur directionnel, qu'un écart entre le premier guide d'onde (4) et le deuxième guide d'onde (5) peut être modifié à cet endroit par une déformation ou un mouvement du premier guide d'onde (4) ou d'un support (12) du premier guide d'onde (4),
dans lequel le capteur comporte une surface fonctionnelle pour l'accumulation ou le stockage de la substance à détecter, et l'écart entre le premier guide d'onde et le deuxième guide d'onde peut être modifié par accumulation ou stockage de la substance à détecter sur ou par la surface fonctionnelle, de sorte que l'accumulation ou le stockage de cette substance permet de modifier une force d'un couplage entre le premier guide d'onde (4) et le deuxième guide d'onde (5), transmise par le coupleur directionnel,
dans lequel
- au moins le premier guide d'onde (4) s'étend sur le trajet de couplage en étant suspendu librement, et la surface fonctionnelle comprend une couche de surface du premier guide d'onde (4) et/ou d'un support (12) apte à être dévié, lequel maintient le premier guide d'onde (4), ou
- au moins le premier guide d'onde (4) repose exclusivement sur un matériau gonflant (13) absorbant la substance, et la surface fonctionnelle est formée par le matériau gonflant (13) portant le premier guide d'onde (4) ou une partir du premier guide d'onde (4).

2. Capteur selon la revendication 1, **caractérisé en ce qu'**il comprend un substrat (1) portant le premier et le deuxième guide d'onde (4, 5).

3. Capteur selon la revendication 2, **caractérisé en ce que** le premier guide d'onde (4) et le deuxième guide d'onde (5) sont séparés du substrat (1) au moins par une couche tampon (2, 3).

4. Capteur selon la revendication 3, **caractérisé en ce que** la couche tampon (2 ; 3) est évidée dans la région du coupleur directionnel de manière à ce qu'au moins le premier guide d'onde (4) soit sapé à cet endroit.

5. Capteur selon l'une des revendications 1 à 4, **caractérisé en ce que** le premier guide d'onde (4) et le deuxième guide d'onde (5) s'étendent dans un seul plan ou dans deux plans séparés l'un de l'autre par une couche tampon (3).

6. Capteur selon l'une des revendications 1 à 5, **caractérisé en ce qu'**il comprend un guide d'onde d'alimentation (8) couplé à une source de lumière et un guide d'onde de sortie (11) couplé à un élément sensible à la lumière.

7. Capteur selon la revendication 6, **caractérisé en ce que** le guide d'onde d'alimentation (8) est fourni par le premier guide d'onde (4) ou le deuxième guide d'onde (5) ou couplé optiquement au premier guide d'onde (4) ou au deuxième guide d'onde (5).

8. Capteur selon l'une des revendications 6 ou 7, **caractérisé en ce que** le guide d'onde de sortie (11) est fourni par le deuxième guide d'onde (5) ou le premier guide d'onde (4) ou couplé optiquement au deuxième guide d'onde (5) ou au premier guide d'onde (4).

9. Capteur selon l'une des revendications 1 à 8, **caractérisé en ce que** le premier guide d'onde (4) et/ou le deuxième guide d'onde (5) sont conçus comme un anneau guide d'onde fermé.

10. Capteur selon l'une des revendications 1 à 9, **caractérisé en ce que** le premier guide d'onde (4) et/ou le deuxième guide d'onde (5) est conçu comme un guide d'onde monomode.

11. Capteur selon l'une des revendications 1 à 10, **caractérisé en ce qu'**il forme ou comprend une optique intégrée.
